# EUROPEAN PATENT APPLICATION

(11) **EP 2 535 536 A2**
(43) Date of publication of application: **19.12.2012**
(21) Application number: 12171926.4
(22) Date of filing: 14.06.2012
(51) Int. Cl.: F01N 3/20, B01F 5/04

(54) **Reducing agent injection nozzle and nitrogen oxide purification system with reducing agent injection nozzle**

(30) Priority: 15.06.2011 JP 2011133296
(71) Applicant: Kabushiki Kaisha Toyota Jidoshokki, Kariya-shi, Aichi 448-8671 (JP)
(72) Inventor: Hatta, Masanori, Kariya-shi, Aichi 448-8671 (JP)
(74) Representative: TBK

(57) **Abstract**

A reducing agent injection nozzle includes a nozzle body (11), the lower end portion of the nozzle body is provided with flat opening surfaces (15, 16) which are inclined so as to face different directions, the opening surfaces of the lower end portion of the nozzle body are each provided with a pair of injection apertures (21a, 21b, 22a, 22b) which are opened to the opening surfaces, and the pair of injection apertures are formed so that aqueous urea solutions respectively injected from the injection apertures collide with each other.

## Description

### BACKGROUND OF THE INVENTION

### Field of the Invention

The present invention relates to the configuration of a reducing agent injection nozzle which injects a reducing agent added to an exhaust gas of an internal combustion engine and the configuration of a nitrogen oxide purification system with the reducing agent injection nozzle.

### Description of the Related Art

As an example of a nitrogen oxide purification system which purifies nitrogen oxide (NOx) contained in the exhaust gas of a diesel engine, a urea selective reduction system (urea SCR system) which uses an aqueous urea solution as a reducing agent may be exemplified. For example, as disclosed in Japanese Patent Application Laid-Open No. 2005-113688, a urea SCR system includes a reducing catalyst which is provided in an exhaust pipe and a reducing agent injection nozzle which is disposed on the upstream side of the reducing catalyst and injects an aqueous urea solution into the exhaust pipe. The reducing catalyst causes a reaction of nitrogen oxide contained in the exhaust gas with ammonia (NH₃) produced from the aqueous urea solution injected into the exhaust pipe, and reduces it into harmless nitrogen (N₂) and water (H₂O) thereby purifying the nitrogen oxide. Further, the reducing agent injection nozzle is inclined at a predetermined angle with respect to the flow of the exhaust gas so that the reducing agent may be injected toward the reducing catalyst.

In order to improve the purification efficiency of the nitrogen oxide using the reducing catalyst, there is a need to supply the aqueous urea solution to the entire surface of the reducing catalyst so as to be a uniformly distributed. However, since the reducing agent injection nozzle generally injects the aqueous urea solution in a conical shape, in order to widely spread the aqueous urea solution on the entire surface of the reducing catalyst, there is a need to ensure some distance between the reducing agent injection nozzle and the reducing catalyst so that the injection range of the aqueous urea solution is sufficiently widened. On the other hand, as disclosed in Japanese Patent Application Laid-Open No. 2005-113688, for example, an oxidation catalyst or the like which is different from the reducing catalyst is generally provided on the upstream side of the reducing catalyst and the reducing agent injection nozzle. When the distance between the catalysts is lengthened, problems such as vehicle mountability is degraded due to an increase in the size of the entire system or increases in pressure loss arise. That is, in the case that the reducing agent injection nozzle disclosed in Japanese Patent Application Laid-Open No. 2005-113688 is used, as the points of improving in the purification efficiency of nitrogen oxide and decreasing the distance between the catalysts are contrary to each other, the problem arises that it is difficult to achieve both these things at once.

### SUMMARY OF THE INVENTION

The present invention has been made to solve these problems, with the aim of providing a reducing agent injection nozzle which injects a reducing agent at a wide angle at a short distance and a nitrogen oxide purification system which shortens the distance between catalysts while improving the purification efficiency of nitrogen oxide.

According to one aspect of the invention, there is provided a reducing agent injection nozzle including: a nozzle body which is provided with a plurality of injection apertures, a reducing agent being injected from the plurality of injection apertures, wherein in the nozzle body, a pair of the injection apertures arranged along one direction are formed, and wherein a pair of injection apertures are formed so that the reducing agent injected from one injection aperture and the reducing agent injected from the other injection aperture collide with each other.

### BRIEF DESCRIPTION OF THE DRAWINGS

Fig. 1 is a schematic diagram illustrating a configuration of a nitrogen oxide purification system according to Embodiment 1 of the invention.
Fig. 2 is a partially enlarged cross-sectional view schematically illustrating a configuration of a reducing agent injection nozzle according to Embodiment 1.
Fig. 3 is a perspective view illustrating the lower end portion of the reducing agent injection nozzle according to Embodiment 1.
Fig. 4 is a cross-sectional view taken along the line IV-IV of Fig. 2.
Fig. 5 is a perspective view schematically illustrating a pattern of a reducing agent which is sprayed from the reducing agent injection nozzle according to Embodiment 1.
Figs. 6A and 6B are schematic diagrams illustrating the injection range of the reducing agent using the reducing agent injection nozzle according to Embodiment 1, where Fig. 6A illustrates the injection range along the direction in which an exhaust gas travels and Fig. 6B illustrates the injection range along the direction perpendicular to the direction illustrated in Fig. 6A.
Fig. 7 is a perspective view illustrating a lower end portion of a reducing agent injection nozzle according to Embodiment 2 of the invention.
Fig. 8A is a diagram schematically illustrating a configuration of a nitrogen oxide purification system according to Embodiment 3 of the invention, and Fig. 8B is a diagram schematically illustrating a cross section of the reducing agent of Fig. 8A.
Fig. 9 is a schematic diagram illustrating a configuration of a nitrogen oxide purification system according to the other embodiments of the invention.
Fig. 10 is a perspective view illustrating a lower end portion of a reducing agent injection nozzle according to another Embodiment of the invention.

### DESCRIPTION OF THE PREFERRED EMBODIMENT

Hereinafter, preferred embodiments of the invention will be described by referring to the accompanying drawings.

### Embodiment 1

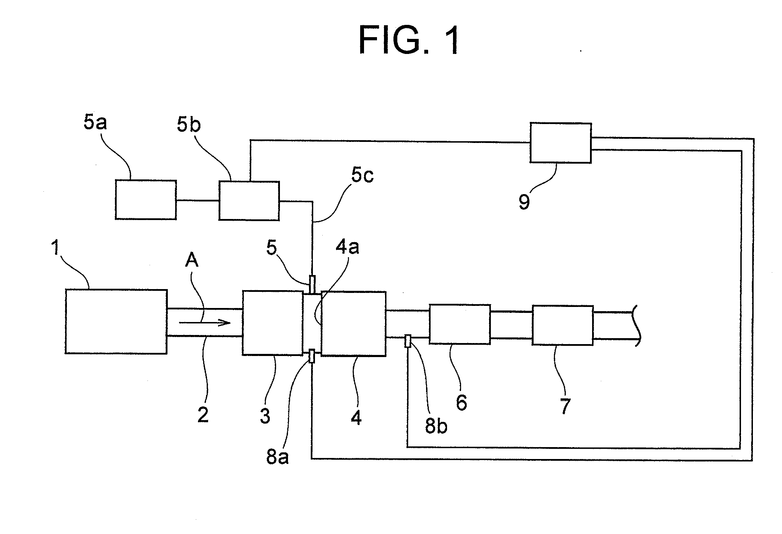

Fig. 1 schematically illustrates a configuration of an exhaust system of a diesel engine with a nitrogen oxide purification system according to Embodiment 1.

An exhaust pipe 2 is connected to a diesel engine 1 which is an internal combustion engine, and an exhaust gas discharged from the diesel engine 1 passes in the exhaust pipe 2 in a direction indicated by the arrow A in a state where the side of the diesel engine 1 is set as the upstream side. An oxidation catalyst 3 is provided in the course of the exhaust pipe 2 so as to oxidize carbon monoxide (CO), hydrocarbon (HC), or the like contained in the exhaust gas. Further, an SCR catalyst 4 which is a reducing catalyst is provided on the downstream side of the oxidation catalyst 3 so as to purify nitrogen oxide (NOx) contained in the exhaust gas.

The SCR catalyst 4 is a catalyst which purifies NOx by the reaction of a reaction gas with ammonia (NH₃) which is produced from an aqueous urea solution added to the exhaust gas as a reducing agent. A reducing agent injection nozzle 5 which injects the aqueous urea solution into the exhaust pipe 2 is provided between the oxidation catalyst 3 and the SCR catalyst 4. An aqueous urea solution tank 5a which stores the aqueous urea solution therein and an aqueous urea solution addition system 5b which supplies the aqueous urea solution in the aqueous urea solution tank 5a to the reducing agent injection nozzle 5 are connected to the reducing agent injection nozzle 5 through a connection pipe 5c. Furthermore, the portion of the exhaust pipe 2 which is positioned between the oxidation catalyst 3 and the SCR catalyst 4 has approximately the same diameter as those of the catalysts, and is connected to the oxidation catalyst 3 and the SCR catalyst 4 without throttling the area of the flow passage of the exhaust gas.

A filter 6 which traps particulate materials (PM) contained in the exhaust gas is provided on the downstream side of the SCR catalyst 4. Further, a slip catalyst 7 which eliminates ammonia passing through the SCR catalyst 4 without any reaction, for example, when the amount of ammonia is excessively larger than the amount of NOx contained in the exhaust gas is provided on the downstream side of the filter 6. A muffler (not illustrated) is connected to the downstream side of the slip catalyst 7, and the exhaust gas passing through the slip catalyst 7 is discharged into the atmosphere after reducing the exhaust noise inside the muffler.

Further, NOx sensors 8a and 8b which detect the amount of NOx contained in the exhaust gas are respectively provided on the upstream side and the downstream side of the SCR catalyst 4. The aqueous urea solution addition system 5b and the NOx sensors 8a and 8b are electrically connected to an ECU 9 which controls the operations of the diesel engine 1 and the nitrogen oxide purification system. The ECU 9 determines the injection amount and the injection timing of the aqueous urea solution based on the amount of NOx detected by the NOx sensors 8a and 8b, and outputs a signal based on the determined result to the aqueous urea solution addition system 5b, thereby controlling the injection of the aqueous urea solution using the reducing agent injection nozzle 5.

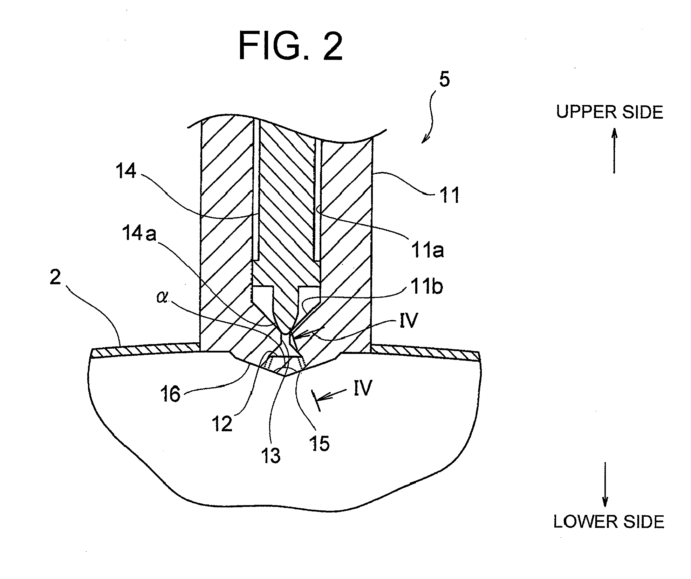

Here, the configuration of the reducing agent injection nozzle 5 will be described in detail by referring to Figs. 2 to 4.
First, Fig. 2 illustrates a main part of the reducing agent injection nozzle 5 when seen from the upstream side in the direction in which the exhaust gas circulates (see the arrow A of Fig. 1). Furthermore, for convenience of description, the up-down direction of the reducing agent injection nozzle 5 is defined by the respective arrows illustrated in Fig. 2.
As illustrated in Fig. 2, the reducing agent injection nozzle 5 includes a nozzle body 11 which is attached to the exhaust pipe 2. A reducing agent passageway 11a which extends in the up-down direction is formed inside the nozzle body 11, and the aqueous urea solution is supplied from the aqueous urea solution tank 5a (see Fig. 1) into the reducing agent passageway 11a. The lower end portion of the reducing agent passageway 11a s provided with a seat portion 11b which is narrowed downward in a taper shape. The lower portion of the seat portion 11b is provided with a space 12 which is widened downward in a taper shape, and the seat portion 11b and the space 12 are connected to each other through a communication aperture 13.

Further, the reducing agent injection nozzle 5 includes a needle valve 14 which is configured to be slidable inside the reducing agent passageway 11a of the nozzle body 11. The needle valve 14 is a member which opens and closes the communication aperture 13 by a tip end portion 14a at the lower side, and is configured to be movable up and down inside the reducing agent passageway 11a by the driving of a solenoid (not illustrated) which is provided at the upper side of the nozzle body 11. The needle valve 14 has a passage (not illustrated) which allows to flow the aqueous urea solution from the reducing agent passage way 11a to the seat portion 11b. When the needle valve 14 is moved downward, the tip end portion 14a comes into contact with the seat portion 11b, so that the communication aperture 13 is blocked, and the supply of the aqueous urea solution from the reducing agent passageway 11a to the space 12 is stopped. On the other hand, when the needle valve 14 is moved upward, the tip end portion 14a is separated from the seat portion 11b, so that the communication aperture 13 is opened, and the supply of the aqueous urea solution from the reducing agent passageway 11a to the space 12 is started.

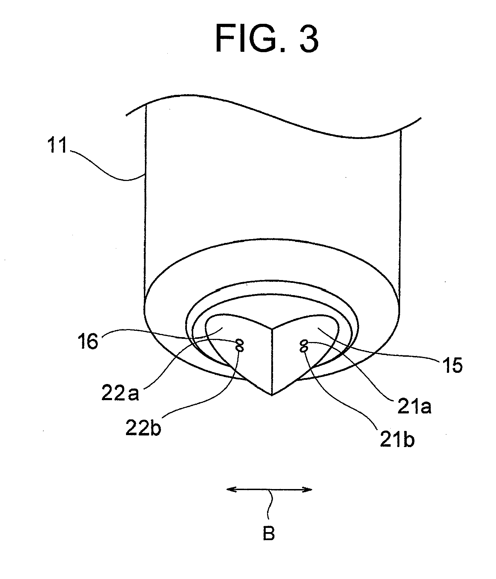

In the reducing agent injection nozzle 5 with such a configuration, the lower end portion of the nozzle body 11 is provided with two flat surfaces, that is, opening surfaces 15 and 16 which are inclined at an angle α so as to face different directions, and the opening surfaces 15 and 16 are exposed in the exhaust pipe 2. Further, as illustrated in Fig. 3, the lower end portion of the nozzle body 11 is provided with a pair of injection apertures 21a and 21b which are opened to the opening surface 15 and a pair of injection apertures 22a and 22b which are opened to the opening surface 16, and the injection apertures communicate with the space 12 and the inside of the exhaust pipe 2. That is, the reducing agent injection nozzle 5 (see Fig. 2) allows the reducing agent passageway 11a and the space 12 to communicate with each other by moving the needle valve 14 upward so as to open the communication aperture 13, and injects the aqueous urea solution supplied into the space 12 from the respective injection apertures 21a, 21b, 22a, and 22b.

The pair of injection apertures 21a and 21b which are opened to the opening surface 15 are arranged along the direction indicated by the arrow A of Fig. 1, that is, the direction in which the exhaust gas circulates inside the exhaust pipe 2. In the same way, the pair of injection apertures 22a and 22b which are opened to the opening surface 16 are also arranged along the direction indicated by the arrow A of Fig. 1. Further, the pair of injection apertures including the injection aperture 21a and the injection aperture 21b and the pair of injection apertures including the injection aperture 22a and the injection aperture 22b are arranged along the plane direction (see the arrow B) perpendicular to the direction indicated by the arrow A. That is, in the reducing agent injection nozzle 5, the pair of injection apertures 21a and 21b and the pair of injection apertures 22a and 22b which are arranged along one direction (see the arrow A) are formed at two positions along the plane including the arrow B and perpendicular to the one direction. Furthermore, the direction which is indicated by the arrow B of Fig. 3 matches the direction in which the end surface 4a (see Fig. 1) on the upstream side of the SCR catalyst 4 extends.

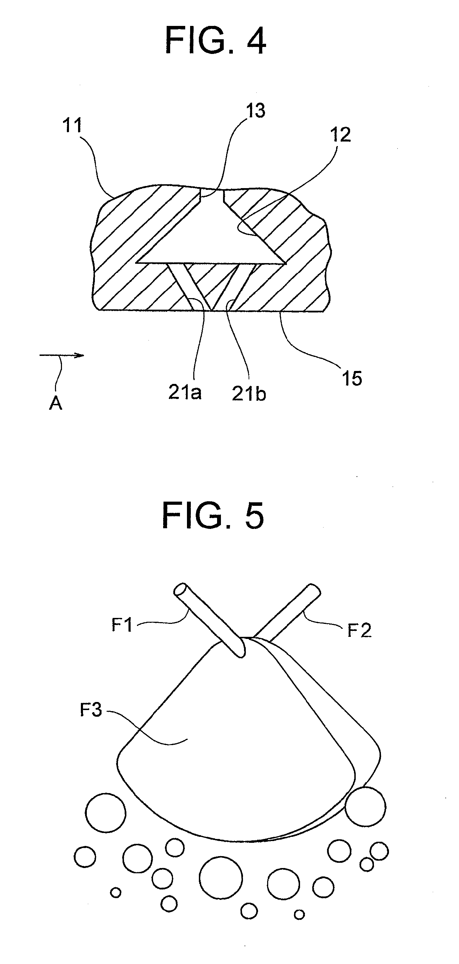

As illustrated in Fig. 4, the pair of injection apertures 21a and 21b which are opened to the opening surface 15 are inclined with respect to each other so as to form a V-shape, whereby the aqueous urea solution injected from one injection aperture 21a and the aqueous urea solution injected from the other injection aperture 21b collide with each other immediately after the injection. Further, although it is not illustrated in the drawings, as in the case of the injection aperture 21a and the injection aperture 21b, the pair of injection apertures 22a and 22b which are opened to the opening surface 16 are also inclined with respect to each other, whereby the aqueous urea solution injected from the injection aperture 22a and the aqueous urea solution injected from the injection aperture 22b collide with each other.

Next, the operations of the nitrogen oxide purification system and the reducing agent injection nozzle 5 according to Embodiment 1 of the invention will be described.
As illustrated in Fig. 1, when the operation of the diesel engine 1 is started, the exhaust gas which is discharged into the exhaust pipe 2 circulates in a direction indicated by the arrow A, and passes through the oxidation catalyst 3, so that a part of the nitrogen monoxide (NO) is oxidized into nitrogen dioxide (NO₂) at the same time as the carbon monoxide (CO), hydrocarbon (HC), or the like contained in the exhaust gas is oxidized by the oxidation catalyst 3. Further, when the operation of the diesel engine 1 is started, a signal for opening the valve of the reducing agent injection nozzle 5 is output from the ECU 9 to the aqueous urea solution addition system 5b.

When the signal for opening the valve of the reducing agent injection nozzle 5 is output from the ECU 9, as illustrated in Fig. 2, the needle valve 14 is moved upward by the driving of a solenoid (not illustrated). When the needle valve 14 is moved upward, the tip end portion 14a is separated from the seat portion 11b, so that the communication aperture 13 is opened, and supply of the aqueous urea solution from the reducing agent passageway 11a into the space 12 is started. The aqueous urea solution which is supplied into the space 12 is injected into the exhaust pipe 2 from the injection apertures 21a, 21b, 22a, and 22b (see Fig. 3) formed in the tip end portion of the nozzle body 11.

Here, as illustrated in Fig. 4, the pair of injection apertures 21a and 21b are inclined with respect to each other so as to form a V-shape, whereby the aqueous urea solutions injected from the injection apertures collide with each other. In such a case, as schematically illustrated in Fig. 5, an aqueous urea solution F1 injected from the injection aperture 21a and an aqueous urea solution F2 injected from the injection aperture 21b collide with each other and are widened in a substantially flat fan shape, which is a so-called impinging jet F3. Furthermore, the fan-like impinging jet F3 is substantially flat in a direction in which the pair of injection apertures 21a and 21b is arranged (see the arrow A of Figs. 1 and 4) and is widened in a direction (see the arrow B of Fig. 3) perpendicular to the direction. Further, the fan-like impinging jet F is also generated near the pair of injection apertures 22a and 22b which is opened to the opening surface 16.

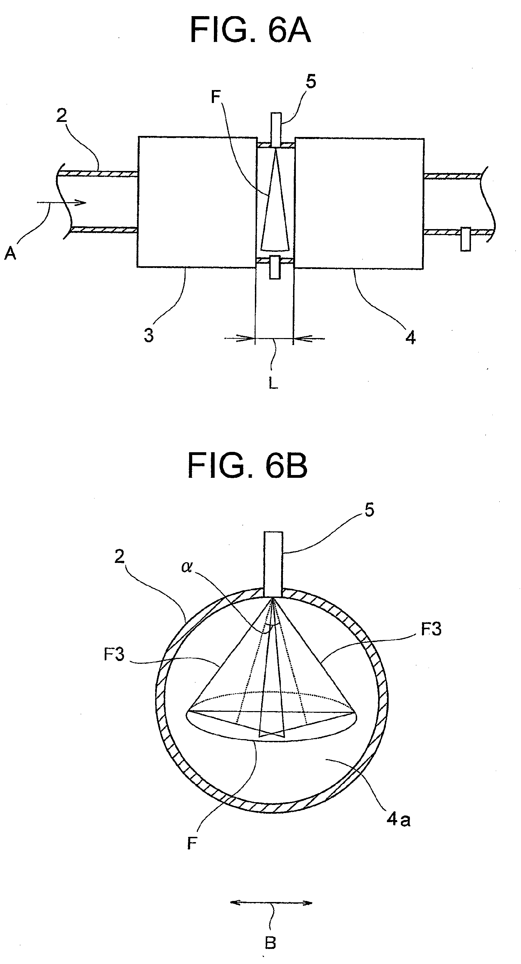

Further, as illustrated in Fig. 3, the pair of injection apertures 21a and 21b and the pair of injection apertures 22a and 22b are arranged in a direction (see the arrow B) perpendicular to the direction (see the arrow A) in which the pair of injection apertures is arranged, that is, the exhaust gas circulates. That is, as illustrated in Fig. 6A, the injection range of the aqueous urea solution F using the reducing agent injection nozzle 5 stretches without being thickened in the direction (see the arrow A) in which the exhaust gas circulates. Accordingly, since the distance L which is necessary between the oxidation catalyst 3 and the SCR catalyst 4 is shortened, it is possible to decrease the size of the entire nitrogen oxide purification system and reduce the pressure loss between the oxidation catalyst 3 and the SCR catalyst 4.

On the other hand, as illustrated in Fig. 6B, the aqueous urea solution F3 injected from the injection aperture 21a and the injection aperture 21b and the aqueous urea solution F3 injected from the injection aperture 22a and the injection aperture 22b are respectively widened in a fan shape in the direction (see the arrow B) perpendicular to the direction (see the arrow A of Fig. 6A) in which the exhaust gas circulates. Furthermore, since the opening surface 15 to which the injection apertures 21a and 21b are opened and the opening surface 16 to which the injection apertures 22a and 22b are opened are inclined by an angle α (see Fig. 2) so as to face different directions and two fan-like injection ranges are also inclined by the angle α, it is possible to inject the aqueous urea solution F with respect to the end surface 4a of the SCR catalyst 4 with a wider angle.

Returning to Fig. 1, as described above, when ammonia which is produced from the aqueous urea solution injected from the reducing agent injection nozzle 5 is supplied to the SCR catalyst 4, the SCR catalyst 4 cause a reaction between the ammonia and the exhaust gas, so that NOx contained in the exhaust gas is reduced into harmless nitrogen (N₂) and water (H₂O). The exhaust gas which passes through the SCR catalyst 4 passes through the filter 6, and at that time, the particulate materials contained in the exhaust gas are eliminated. Further, when excessive ammonia is contained in the exhaust gas passing through the filter 6, the excessive ammonia is eliminated by the slip catalyst 7. The exhaust gas passing through the slip catalyst 7 is discharged into the atmosphere while the noise is reduced inside a muffler (not illustrated). Furthermore, the NOx sensors 8a and 8b temporarily detect the concentration of NOx on the upstream side and the downstream side of the SCR catalyst 4, and the ECU 9 controls the injection amount of the aqueous urea solution using the reducing agent injection nozzle 5 based on the concentration of NOx detected by the NOx sensors 8a and 8b.

As described above, since the pair of injection apertures 21a and 21b and the pair of injection holes 22a and 22b which generate the fan-like impinging jets are formed in the nozzle body 11 of the reducing agent injection nozzle 5, the entire injection range of the aqueous urea solution may be widened in the direction indicated by the arrow B while being maintained so as to be substantially flat in the direction indicated by the arrow A. That is, it is possible to disperse more aqueous urea solution within a range of a short distance in the direction of the arrow A than aqueous urea solutions of an equivalent amount injected in a taper shape. Accordingly, in the reducing agent injection nozzle 5, the reducing agent may be injected at a wide angle in a short distance.

Further, since the nozzle body 11 is provided with the opening surface 15 to which the injection apertures 21a and 21b are opened and the opening surface 16 to which the injection apertures 22a and 22b are opened and the opening surfaces 15 and 16 are inclined by the angle α so as to face different directions, an inclination of the angle α is also formed between the fan-like injection from the injection apertures 21a and 21b and the fan-like injection from the injection apertures 22a and 22b, and the aqueous urea solution may be injected with a wider angle.

Furthermore, as described above, since the reducing agent injection nozzle 5 is configured to inject the aqueous urea solution at a wide angle in a short distance, the aqueous urea solution may be broadly supplied to the entire surface of the SCR catalyst 4 even when the SCR catalyst 4 and the reducing agent injection nozzle 5 are arranged adjacent to each other. Accordingly, since the distance L necessary between the oxidation catalyst 3 and the SCR catalyst 4 is shortened, it is possible to decrease the size of the entire system by shortening the distance L between the catalysts while improving the purification efficiency of NOx or reduce the pressure loss between the catalysts.
Further, since there are a plurality of injection apertures formed in the nozzle body 11 (in the embodiment, four injection apertures 21a, 21b, 22a, and 22b), it is possible to reduce the injection pressure and more uniformly inject the reducing agent compared to the case where the reducing agents of the equivalent amount are injected from a single injection aperture.

### Embodiment 2

Next, a reducing agent injection nozzle according to Embodiment 2 of the invention will be described.

In the reducing agent injection nozzle according to Embodiment 2, three opening surfaces are formed compared to the reducing agent injection nozzle of Embodiment 1 having two opening surfaces to which the injection apertures are opened. Furthermore, in the respective embodiments to be described below, since the same reference numerals of Figs. 1 to 6B are given to the same or similar components, the specific description thereof will not be repeated.

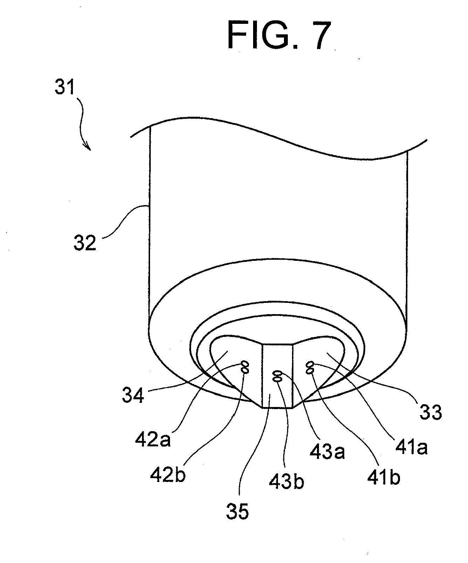

As illustrated in Fig. 7, the lower end portion of a nozzle body 32 in a reducing agent injection nozzle 31 is provided with three flat opening surfaces 33 to 35. Among the opening surfaces 33 to 35, the opening surfaces 33 and 34 which are formed at both end portions are inclined by the angle α (see Fig. 2) as in the case of the opening surfaces 15 and 16 of Embodiment 1, and the intersection portion is flattened so as to form the center opening surface 35. Further, the lower portion of the nozzle body 32 is provided with a pair of injection apertures 41a and 41b which are opened to the opening surface 33, a pair of injection apertures 42a and 42b which are opened to the opening surface 34, and a pair of injection apertures 43a and 43b which are opened to the opening surface 35. The pair of injection apertures which are opened to each of the opening surfaces 33 to 35 are formed so that the aqueous urea solution injected from one injection aperture and the aqueous urea solution injected from the other injection aperture collide with each other as in the case of Embodiment 1. The other configurations are the same as those of Embodiment 1.

As described above, even when three opening surfaces 33 to 35 are formed in the nozzle body 32 of the reducing agent injection nozzle 31, the same effect as that of the reducing agent injection nozzle 5 of Embodiment 1 may be obtained. Furthermore, when the number of opening surfaces, is increased as in the case of the reducing agent injection nozzle 31, the pressure necessary for injecting the aqueous urea solution from each injection aperture decreases. Accordingly, it is possible to widely inject the aqueous urea solution at a pressure lower than when aqueous urea solutions of an equivalent amount are injected from the small number of opening surfaces.

### Embodiment 3

Next, a nitrogen oxide purification system according to Embodiment 3 of the invention will be described.

In the nitrogen oxide purification system according to Embodiment 3, an SCR catalyst 51 to be described below is used instead of the SCR catalyst 4 as the reducing catalyst in the nitrogen oxide purification system according to Embodiment 1.

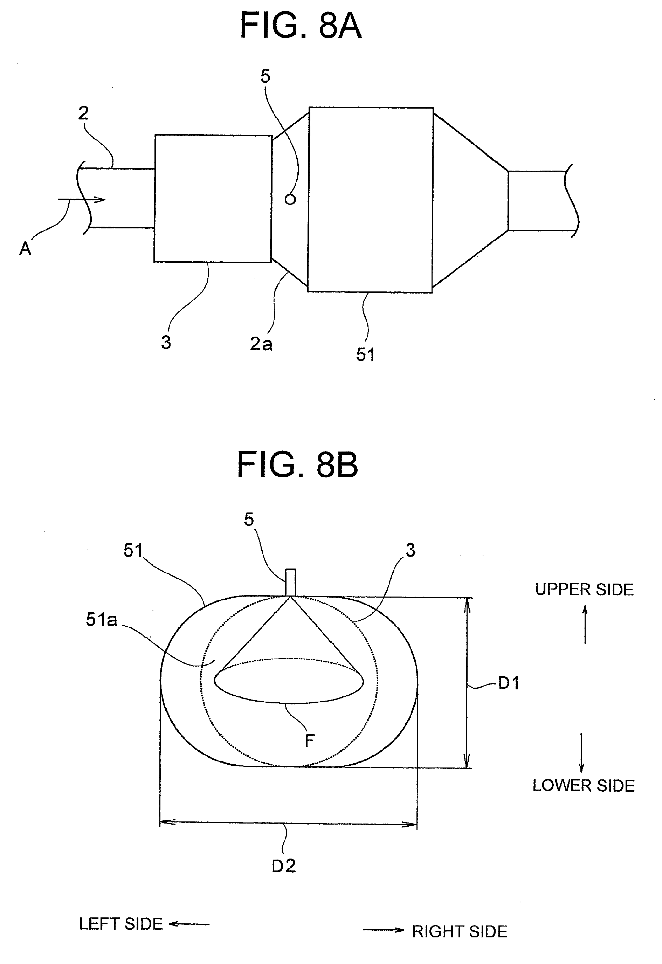

As shown in Fig. 8A, the SCR catalyst 51 which purifies NOx contained in the exhaust gas is provided on the downstream side of the oxidation catalyst 3. As shown in Fig. 8B, the SCR catalyst 51 has an oval cross-sectional shape of which the dimension D1 in the up-down direction is approximately equivalent to the diameter of the oxidation catalyst 3 and the dimension D2 in the left-right direction is larger than the diameter of the oxidation catalyst 3. Further, the oxidation catalyst 3 and the SCR catalyst 51 are connected to each other through a tapered pipe 2a (see Fig. 8A) which is widened toward the downstream side, and a reducing agent injection nozzle 5 is provided in the tapered pipe 2a so as to inject the aqueous urea solution downward. The other configurations are the same as those of Embodiment 1. Furthermore, the cross-sectional shape of the SCR catalyst 51 may be formed in an ellipsoidal shape of which the dimension D1 is set as the short axis and the dimension D2 is set as the long axis.

As described above, even when the nitrogen oxide purification system is configured so as to use the SCR catalyst 51, the same effect as that of Embodiment 1 may be obtained. Further, since the reducing agent injection nozzle 5 injects the aqueous urea solution so as to be widened in the other direction while being maintained so as to be substantially flat in one direction, the injection range has an oval shape or an ellipsoidal shape as seen from a top view. That is, since the aqueous urea solution which is injected from the reducing agent injection nozzle 5 is supplied to the end surface 51a of the SCR catalyst 51 with higher efficiency, it is possible to further improve the purification efficiency of NOx using the SCR catalyst 51.

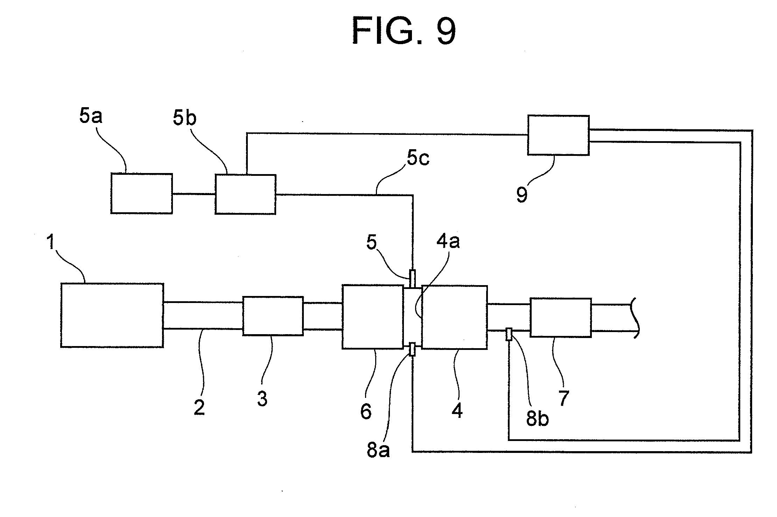

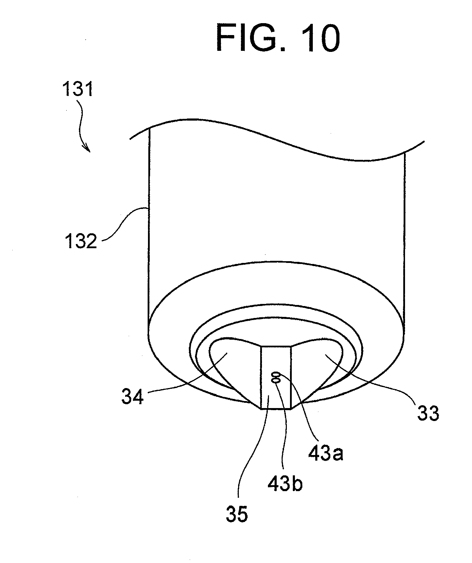

Although the nitrogen oxide purification systems according to Embodiments 1 to 3 are configured as a urea SCR system which purifies NOx with an SCR catalyst in a state where the aqueous urea solution is used as the reducing agent, the invention is not limited to a urea SCR system. For example, the invention may be applied to a purification system with a NOx absorption reducing catalyst which absorbs and purifies NOx in accordance with the air/fuel ratio of the exhaust gas, and in this case, the reducing agent is gas oil.
Further, in the nitrogen oxide purification systems according to Embodiments 1 to 3, the SCR catalyst is provided directly behind the downstream side of the oxidation catalyst, but the arrangement order of the catalysts is not limited. For example, as shown in Fig. 9, the filter 6 may be provided between the oxidation catalyst 3 and the SCR catalyst 4, and the reducing agent injection nozzle 5 may be provided on the upstream side of the SCR catalyst 4. In this case, since the distance between the filter 6 and the reducing agent injection nozzle 4 is shortened, it is possible to decrease the size of the entire system as in the case of Embodiments 1 to 3.
In the second Embodiment, the lower portion of the nozzle body 32 is provided with three pairs of injection apertures 41a, 41b, 42a, 42b, 43a and 43b, but injection apertures 41a, 41b, 42a and 42b may be omitted. In this case, the same effect of Embodiment 1 may be obtained. A reducing agent injection nozzle 131 with a nozzle body 132 according to the above Embodiment is shown in Fig. 10.
Further, although the reducing agent injection nozzles according to Embodiments 1 to 3 are provided so that the injection range is maintained so as to be substantially flat without being thickened along the plane perpendicular to the circulation direction of the exhaust gas, but may be maintained so as to be substantially flat without being thickened along the plane which is not perpendicular to the circulation direction of the exhaust gas. For example, the direction of the injected reducing agent may be inclined so as to inject the reducing agent toward the SCR catalyst, and the reducing agent may be injected toward a dispersing member or a so-called mixer or swirler separately provided inside the exhaust pipe.

A reducing agent injection nozzle includes a nozzle body, the lower end portion of the nozzle body is provided with flat opening surfaces which are inclined so as to face different directions, the opening surfaces of the lower end portion of the nozzle body are each provided with a pair of injection apertures which are opened to the opening surfaces, and the pair of injection apertures are formed so that aqueous urea solutions respectively injected from the injection apertures collide with each other.

## Claims

1. A reducing agent injection nozzle comprising:
a nozzle body (11) which is provided with a plurality of injection apertures (21a, 21b), a reducing agent being injected from the plurality of injection apertures (21a, 21b),
wherein in the nozzle body (11), a pair of the injection apertures (21a, 21b) arranged along one direction are formed, and
wherein the pair of injection apertures (21a, 21b) are formed so that the reducing agent injected from one injection aperture (21a) and the reducing agent injected from the other injection aperture (21b) collide with each other.

2. The reducing agent injection nozzle according to claim 1,
wherein the nozzle body (11) includes a plurality of opening surfaces (15, 16) to which the injection apertures (21a, 21b, 22a, 22b) are opened and which are inclined so as to face different directions, and
wherein a pair of injection apertures (21a, 21b, 22a, 22b) is disposed in each of the plurality of opening surfaces (15, 16).

3. The reducing agent injection nozzle according to claim 2, wherein two opening surfaces (15, 16) are formed.

4. The reducing agent injection nozzle according to claim 2, wherein three opening surfaces (33, 34, 35) are formed.

5. The reducing agent injection nozzle according to claim 2, wherein the pairs of injection apertures are arranged in a direction along a plane perpendicular to the one direction.

6. A nitrogen oxide purification system comprising:
an exhaust pipe (2) in which an exhaust gas discharged from an internal combustion engine (1) circulates;
the reducing agent injection nozzle (5, 31) according to any one of claims 1 to 5 configured to inject the reducing agent into the exhaust pipe (2); and
a reducing catalyst (4, 51) which is disposed on the downstream side of the reducing agent injection nozzle (5, 31) and causes a reaction between the exhaust gas and the reducing agent so as to purify nitrogen oxide contained in the exhaust gas.

7. The nitrogen oxide purification system according to claim 6, wherein the reducing catalyst (51) has an oval or ellipsoidal cross-sectional shape in a direction perpendicular to a direction in which the exhaust gas circulates.
